# EUROPEAN PATENT APPLICATION

(11) **EP 4 398 383 A1**
(43) Date of publication of application: **10.07.2024**
(21) Application number: 22864650.1
(22) Date of filing: 31.08.2022
(51) Int. Cl.: H01M 12/06, H01M 4/86, H01M 4/90

(54) **AIR BATTERY IN WHICH METALLIC COPPER OR ALLOY THEREOF SERVES AS OXYGEN REDUCING AIR ELECTRODE**

(30) Priority: 01.09.2021 JP 2021142106
(71) Applicant: Cross Technology Labo Co., Ltd., Aizuwakamatsu-shi, Fukushima 965-0053 (JP)
(72) Inventor: SASO, Mitsuhiro, Himeji-shi, Hyogo 670-0974 (JP)
(74) Representative: AOMB Polska Sp. z.o.o.
(86) International application number: PCT/JP2022/032841
(87) International publication number: WO 2023/033068

(57) **Abstract**

An air battery or cell in which copper or an alloy thereof serve as an oxygen reducing air electrode is provided. A magnesium air battery or cell comprises an alkaline electrolyte solution having at least a water-soluble electrolyte imparting conductivity and receiving a supply of oxygen or an oxygen supply compound, a metal copper or a copper alloy as an oxygen reduction air electrode (cathode), and a magnesium metal or an alloy thereof having a base electrode potential than the metal copper cathode as a negative electrode (anode), wherein the battery generates an electric force by the following reactions;
Oxidation at the negative electrode (anode): 2Mg→2Mg²⁺+4e-; and
Reduction at the positive electrode (cathode): O₂+2H₂O+4e-→4OH-.

## Description

### [Technical Field]

The present invention relates to an air battery that can be used as a novel emergency power supply using metallic copper or an alloy thereof having an electric double layer as an oxygen reduction air electrode.

### [Background of the Invention]

Generally, a magnesium air battery is a typical air battery in which metal magnesium is used as a negative electrode (anode), a carbon electrode is used as a positive electrode (cathode), and
1) an oxidation reaction: 2Mg→2Mg²⁺+4e- at the magnesium anode side
2) an O₂ reduction reaction: O₂+2H₂O+4e-→4OH- at the cathode side are used to generate electric power, and a saline solution is used as an electrolytic solution, and the electrolytic solution is made alkaline in order to prevent self-discharge. Therefore, since the surface of the negative electrode is likely to be passivated, an auxiliary agent for dissolving the generated magnesium hydroxide is added, or a magnesium alloy having a flame-retardant property is used as the anode in order to perform the power generation for a long time.

However, in order to obtain or extract a large current from such an air battery, it is necessary to remove a factor that affect the electrochemical mal reaction of the air battery including a factor for limiting the reaction rate. Among these factors, one is considered to be an absorption rate of oxygen at the cathode, rather than an ionization rate of magnesium at the anode, so that a new oxygen reduction cathode electrode capable of absorbing oxygen with high efficiency is urgently required.

Conventionally, a porous carbon capable of absorbing oxygen with high efficiency is used as an oxygen reduction air electrode (cathode) of the air battery, and the improvement of the carbon cathode is generally performed (Patent Document 1).

### [Prior art documents]

### [Patent Document]

[Patent Document 1] JP 2014-220107

### [Summary of the invention]

### [Problem to be solved by the invention]

The present inventors have discovered that when metal copper is immersed in water, decomposition of water occurs on the copper surface, and the decomposition becomes remarkable by the addition of hydrogen peroxide. The present inventors have focused on this Cu catalyst function concerning to the water splitting reaction, as a result there has been completed an air battery in which copper and an alloy thereof are used as an air electrode instead of the traditional carbon cathode and so on and oxygen is supplied by hydrogen peroxide instead of the air. That is, an object of the present invention is to provide a configuration of an air battery using Cu catalyst function in which copper or an alloy thereof is used as a cathode electrode in an alkaline electrolyte, and oxygen in hydrogen peroxide is used as an active material, so that there happens the synergy effect due to the combination of Cu cathode and hydrogen peroxide active material in the alkali solution.

### [Means for solving the problem]

the oxidation at the negative electrode (anode): 2Mg→2Mg²⁺+4e-; and Reduction at the positive electrode (cathode): O₂+2H₂O+4e-→4OH-.
According to the present invention, it is confirmed that another reaction would be further obtained by Cu catalyst function with hydrogen peroxide in a magnesium-air battery, when the present invention comprising copper electrode and hydrogen peroxide is compared with the traditional air battery comprising carbon electrode and oxygen in the air.

In the present invention, in order to utilize the reduction reaction of oxygen supplied from hydrogen peroxide on the metal copper surface, the anode electrode is formed into a plate-like, it is preferable to have at least one set of electrode configurations formed by arranging metal copper or alloy plates on both surfaces thereof at intervals of spacer.

### [Effect of the Invention]

According to the present invention, oxygen is reduced by the following reaction on the metal-copper surface is a cathode electrode, but hydroxide ions occur, O₂+2H₂O+4e-→4OH-
According to the present invention, the hydroxide ions seem to be further decomposed into hydrogen and oxygen on the surface of the metal copper, which is the cathode electrode, and there is a phenomenon of exotherm peculiar to the reaction due to Cu catalyst function. On the other hand, since the aqueous electrolyte solution containing the electrolyte and hydrogen peroxide is in a nearly neutral region, magnesium constituting the anode electrode only dissolves up to 5% of the total in almost 1 day and night, and is extremely small compared with the case of a voltaic cell as a traditional chemical cell using dilute sulfuric acid as an electrolyte solution. In the voltaic cell, the copper surface is passivated in approximately 1 hour to stop the power generation, whereas in the present invention, as long as oxygen is present in the electrolyte, one day and night power generation continues, so it is recognized that a magnesium air battery in which oxygen is reduced, is formed on the surface of the copper electrode instead of a chemical battery in which the anode electrode dissolves. In addition, when the electrolytic solution is formed by combining an electrolyte containing salt or the like and sodium percarbonate as an oxygen supply source, the electrolytic solution can be adjusted by adding water or seawater at the time of use, so that it becomes an excellent emergency power source for storage.

### [Brief Description of the Drawings]

[Fig. 1] It is a conceptual diagram showing a Mg anode/alkali electrolyte containing hydrogen peroxide/Cu cathode battery of the present invention.
[Fig. 2] In the present invention, an electric double layer is formed which does not short-circuit even when the anode electrode and the cathode electrode are in contact with each other.
[Figure 3A] It is a perspective view showing a copper cathode electrode via a spacer.
[Figure 3B] It is an end view showing an electrode configuration in which the copper cathode electrode and the magnesium electrode are superposed via a spacer as shown in Fig.3A.

### [Mode for carrying out the invention]

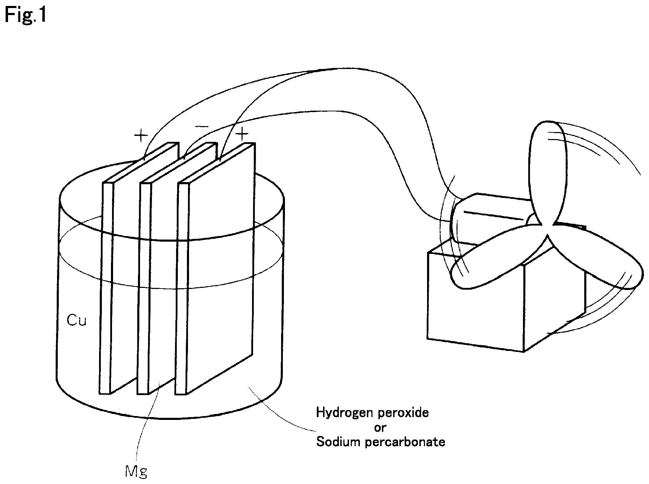

As shown in FIG. 1, Mg anode electrode and Cu cathode electrode are immersed in an alkaline electrolyte solution containing hydrogen peroxide to face each other. An electromotive force in the configuration of an alkaline electrolyte/cathode electrode comprising an anode electrode/hydrogen peroxide, the reaction of which is as follows:
2Mg→2Mg²⁺ + 4e-the anodic oxidation-reaction,
On the other hand, the cathode-side reduction process is O₂+H₂O+4e-→4OH-. In the present invention, in order to accelerate the reduction reaction on the cathode side of the metal-air battery, hydrogen peroxide was added to the electrolytic solution to improve the reason why the ionization progress rate of the cathode side positive electrode is inferior to that of the anode side negative electrode. In other words, the metallic copper is partially dissolved in the electrolyte containing hydrogen peroxide as shown in the following reaction:

   Cu+2H₂O₂→Cu²⁺+2OH+2OH- and Cu+2OH→Cu²⁺+2OH-.

   but this reaction seems to accelerate the decomposition of hydrogen peroxide by Haber u. Willstatter chain (Non-Patent Document 3 in PCT/JP2022/032842: Eiji Minato: Advances in Physical Chemistry (1936), 10(3); Pages 154-165)).

In the present invention, it is preferable that a part or all of hydrogen peroxide is supplied to the aqueous electrolytic solution by sodium percarbonate. Specifically, hydrogen peroxide solution (by volume %) or sodium percarbonate (by weight %) is preferably added at a ratio of a few percent to a few ten percent to a neutral or alkaline aqueous solution containing 0.5 to 2.0 mol of an alkali metal or alkaline earth metal halide salt, in particular sodium chloride.

The anode electrode is made of magnesium or an alloy thereof,
(-) Mg/NaCl+H2O2/Cu (+) cell configuration provides the decomposition potential required to decompose hydrogen peroxide or the hydroxyl radicals due to the Cu catalyst function. The magnesium electrode is made of not only metallic magnesium but also MAZ61 and MAZ31 magnesium/aluminum/zinc alloys to reduce the loss of anode.

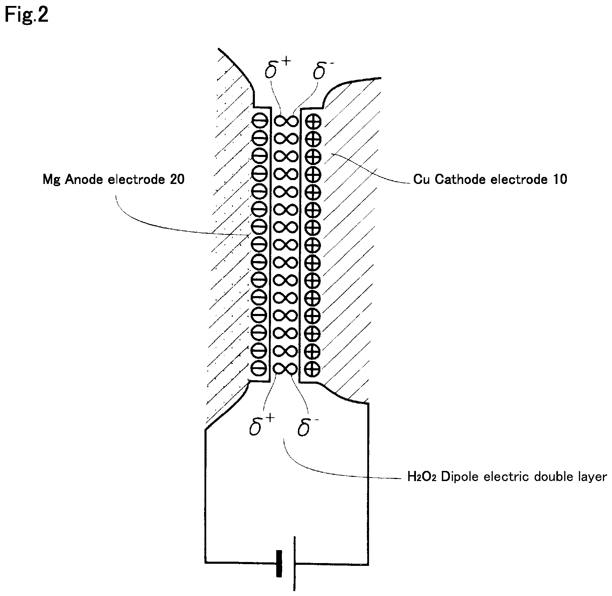

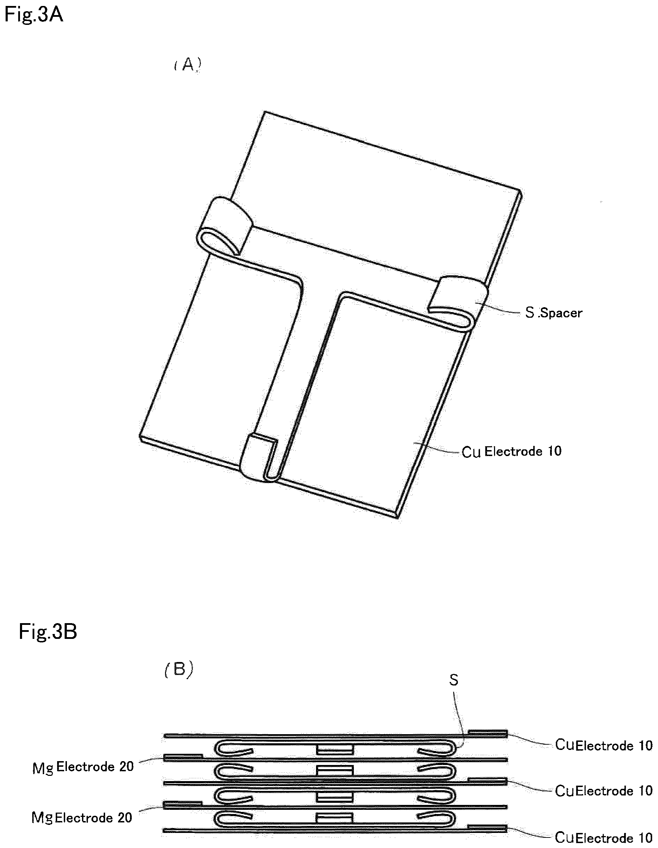

The aforementioned anode electrode and cathode electrode are oppositely arranged with a fixed interval via a spacer S, An electric double layer capacitor is formed by a water-soluble electrolytic solution containing hydrogen peroxide at a contact part between the anode electrode and the cathode electrode as shown in Fig.2, wherein the spacer has a T-shape and may be made from the same material metallic copper or copper alloy as cathode electrode as shown in Fig. 3A. The spacer is interposed on the counter electrode by sandwiching the copper-electrode at regular intervals as shown in Fig. 3B.

### [Industrial applicability]

### (Performance comparison)

A battery with a dipole electric double layer capacitor of the concept shown in FIG. 2 was implemented using a copper electrode. An upper open cuboid plastic container with a volume 3000ml is used. As shown in Fig.3A, the copper electrode plate is cut into a T-shape and is bent at the end portion to form spacer S. The spacer S is attached on a copper cathode electrode plate 10 having a 1mm thickness and an aspect 100×100mm. Mg anode electrode plate 20 having a 2mm thickness in the vertical and horizontal 100×100mm are sandwiched between the cathode electrode plate with the spacer S. When the two Mg anode electrode plates 20 are alternately sandwiched between the three copper cathode electrode plates 10 via the spacers S, the anode and cathode combination is obtained as shown in Fig.3B. This combined electrode constitutes the dipole electric double layer capacitor shown in FIG. 2.

About 0.5 mol /l or more, preferably 1.5 mol /l or more and 2 mol /l or less of sodium chloride is added in pure 1500ml water to prepare an electrolyte, to which is added sodium percarbonate 50~100g and 30% hydrogen peroxide 50ml. After a certain period of time, hydrogen peroxide is consumed and the current is reduced, so 10ml of 30% hydrogen peroxide solution is added every 2-3 hours. As the anode electrode, a magnesium/aluminum/zinc alloy electrode containing MAZ61 or MAZ31 can be used instead of the magnesium electrode. In the above-described embodiment, the hydrogen peroxide solution is supplied to the alkaline electrolyte solution, but sodium percarbonate may be used instead of the hydrogen peroxide solution, or may be used in combination with hydrogen peroxide.

In the present example, based on the following reaction formula,
Hydrogen peroxide decomposes as shown in the following reaction: H₂O₂+2H₂O+2e-→2H₂O+2OH- at the anode while H₂O₂+2OH-→O₂+2H₂O+2e- at the cathode. Together with this, the following typical reaction happens.
That is, the metal-oxidation with alkaline electrolytes becomes the following rection.
At the anode, Mg→Mg²⁺+2e-,
At the cathode, O₂+2H₂O+4e-→4OH-
In fact, the electromotive force of 1.5V and current 3.0A was obtained with the cell reacting by supplying hydrogen peroxide, and pH in the electrolyte was improved and OH-was increased.

Considering the above experimental results, the above performance can be obtained by using copper or an alloy thereof as an oxygen reduction cathode electrode instead of a traditional porous carbon electrode in an alkaline electrolytic solution containing hydrogen peroxide instead of the air in the traditional air battery, so according to the present invention it is said that it is possible to provide a novel and useful structure as a magnesium air battery having a one-compartment structure. For example, an anode electrode plate made of at least magnesium or an alloy thereof and a cathode electrode plate made of copper or an alloy thereof are combined as shown in Fig.3B, and sodium percarbonate as an oxygen source is stored in the electrolytic solution tank shown in FIG. 1, and sodium chloride is stored as an electrolyte, and water or seawater is charged at the time of use, so that the anode electrode plate can function as a battery. Therefore, the cathode electrode plate can be used as an emergency power source. Although magnesium or an alloy thereof is used as the anode electrode in the above embodiment, aluminum or an alloy thereof or zinc or an alloy thereof may be used instead.

## Claims

1. A magnesium air battery or cell comprising an alkaline electrolyte solution h aving at least a water-soluble electrolyte imparting conductivity and receiving a supply of oxygen, a metal copper or a copper alloy as an oxygen reduction air electrode, and a magnesium metal or an alloy thereof having a base electrode potential than the metal copper cathode as a negative electrode (anode), wherein the battery generates an electric force by the following reactions:
Oxidation at the negative electrode (anode): 2Mg→2Mg²⁺+4e-; and
Reduction at the positive electrode (cathode): O₂+2H₂O+4e-→4OH-.

2. The magnesium air battery or cell according to claim 1, wherein the magnesium electrode is made from a Mg/Al/Zn alloy electrode including MAZ61 and MAZ31.

3. The magnesium air battery or cell according to claim 1, wherein the alkaline electrolyte solution containing sodium percarbonate and/or hydrogen peroxide.

4. An emergency power source comprising an anode electrode made of a magnesium metal or an alloy thereof, a cathode electrode made of a metal copper or an alloy thereof as an oxygen reduction air electrode, a powder of sodium percarbonate and electrolyte and a storage tank, wherein a water or a seawater is charged into the tank to be operated at the time of the battery use.

5. The air battery or cell according to claim 1, wherein as an anode electrode, Zn or Al or an alloy thereof is used instead of Mg.

6. The emergency power source according to claim 4, wherein as an anode electrode, Zn or Al or an alloy thereof is used instead of Mg.
